# EUROPEAN PATENT SPECIFICATION

(11) **EP 1 317 172 B1**
(45) Date of publication and mention of the grant of the patent: **28.02.2007**
(21) Application number: 01961514.5
(22) Date of filing: 22.08.2001
(51) Int. Cl.: A01G 23/08

(54) **A METHOD AND A SYSTEM FOR HANDLING PIECES OF WOOD**
VERFAHREN UND SYSTEM ZUR HANDHABUNG VON HOLZKLÖTZEN
PROCEDE ET SYSTEME DE MANIPULATION DE BILLES DE BOIS

(30) Priority: 23.08.2000 SE 0002987
(43) Date of publication of application: 11.06.2003
(73) Proprietor: Sorvik, Bengt, 755 95 Uppsala (SE)
(72) Inventor: Sorvik, Bengt, 755 95 Uppsala (SE)
(74) Representative: Löfgren, Jonas
(86) International application number: PCT/SE2001/001784
(87) International publication number: WO 2002/015673

(56) References cited:
- WO-A1-99/23873

## Description

The present invention relates to a method and a system for handling pieces of wood according to the preamble of the subsequent claims 1 and 17, respectively.

From WO 99/23873 A1 is previously known a system for making possible a rational forest harvesting and planning thereof. According to one aspect of this system, the forest harvesting is carried out by means of a harvesting machine comprising a vehicle and a harvesting arrangement mounted thereon, the vehicle being provided with a computer arrangement adapted to register quality and/or size concerning harvested pieces of timber. In connection to the felling of a tree, the position of the harvesting machine is determined, for instance by means of a GPS-equipment, and a piece of timber obtained from the tree is marked by a marking device with this position information or a code, by means of which the piece of timber is associatable to the position information, the position information or the code being used for association with quality and/or size data concerning the pieces of timber in question. In this way, it will be possible to treat the wood raw material as products having an identity of origin.

### SUMMARY OF THE INVENTION

A first object of the present invention is to make it possible to associate a certain piece of timber to data that is characteristic for the individual piece of timber and is stored in a data base, which data has been determined in connection with the harvesting by means of an equipment arranged on the harvesting machine, without requiring an identification of the piece of timber by means of a marking applied thereon.

A second object of the invention is to make it possible in a simple manner to follow the movement of an individual piece of timber of known quality and/or size so that the piece of timber in question can be found and fetched when so desired.

According to the invention said objects are achieved by a method having the features defined in the characterising part of the subsequent claim 1, and a system having the features defined in the characterising part of the subsequent claim 17. Since the position for the place of discharge of the piece of timber, i.e. the place where the piece of timber is presently located, is associated to the data characteristic for the piece of timber, a machine that fetches the piece of timber and that is connected to the data base where the position information of the piece of timber and the data characteristic for the piece of timber are stored only has to determine the position for the place where the piece of timber is located in order to obtain information about for instance the quality and/or size of the piece of timber. Since the position for a piece of timber of for instance a certain quality is known, it is also possible to control the fetching of pieces of timber so that pieces of timber of a desired type can be found and fetched for further handling.

According to a preferred embodiment of the invention, updating position information is associated to previous position information stored for the piece of timber. In this way it will be possible to trace the piece of timber backwards to the original place of discharge, i.e. the place where the piece of timber has been discharged by the harvesting machine. This place is normally approximately corresponding to the growth location for the tree from which the piece of timber has been obtained. Consequently, it will in this way be possible to determine the place of origin of the piece of timber with a relatively good accuracy, which can be utilised for several different purposes as more closely described in said WO 99/23873 A1.

According to a further preferred embodiment of the invention, the position information is associated to a geographical data base comprising a set of points or surfaces with given position co-ordinates, a geographical area represented in the geographical data base being reproduced in the form of a map image on a display unit. On the map image, the place corresponding to the latest position information of the piece of timber is indicated. The geographical data base can be said to constitute a digital map on which the present position of the piece of timber is shown. In this way it will for instance be possible for a driver of a forwarder connected to the geographical data base to get a picture of where pieces of timber can be fetched. Furthermore, it will be possible from a central operating centre connected to the data base to control, on the basis of the shown map image, for instance the forwarder to fetch certain determined pieces of timber.

According to a further preferred embodiment of the invention, the piece of timber is represented on the map image by a symbol associated to the data characteristic for the piece of timber, said symbol being shown on the place of the map image corresponding to the latest stored position information of the piece of timber. A certain symbol can for instance represent a piece of timber of a predetermined quality or size. In this way it will be possible for a person that plans or performs the fetching of the timber to rapidly get an apprehension about the characteristics of the pieces of timber located in a certain geographical area, which essentially facilitates the work and renders it more effective.

According to a further preferred embodiment of the invention, the display unit can be controlled to show information concerning a certain piece of timber indicated on the map image, said information being obtained from the data characteristic for the piece of timber. The control can for instance take place by clicking with the aid of a conventional computer mouse on an individual piece of timber indicated on the map image. In this way it will be possible in a simple manner to get information about the characteristics of a certain piece of timber, which for instance facilitates the selection of pieces of timber of a certain type.

According to a further preferred embodiment of the invention, the size and/or weight of the piece of timber is detected in connection with the fetching of the piece of timber, the detected size/weight being compared to stored size/weight values so as to determine the identity of the piece of timber that has been fetched. In this way it will in connection with the fetching be possible to automatically control whether a fetched piece of timber corresponds to an expected piece of timber. This identification of the piece of timber can also be used for an automatisation of the registration of the fetching of the pieces of timber and the registration and storing of the position information indicating the place of discharge of the piece of timber.

Further preferred embodiments of the invention will appear from the dependent claims and the subsequent description.

### BRIEF DESCRIPTION OF THE DRAWINGS

With reference to the enclosed drawings, a more specific description of embodiment examples of the invention will follow herein below.

In the drawings:
- Fig 1: is a schematical view illustrating a preferred embodiment of a system for timber handling according to the invention, and
- Fig 2: is a schematical view illustrating a machine included in the system according to the invention and its equipment.

### DETAILED DESCRIPTION OF PREFERRED EMBODIMENTS OF THE INVENTION

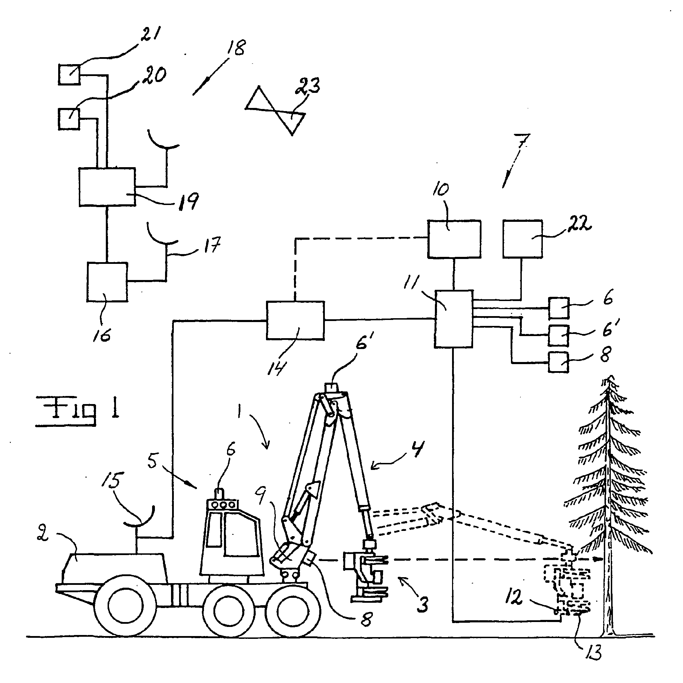

Fig 1 schematically illustrates a system for handling pieces of timber according to a preferred embodiment of the invention. The system comprises a harvesting machine 1 intended for forest harvesting, which harvesting machine comprises a vehicle 2 and a harvesting arrangement 3 mounted thereon. The harvesting arrangement 3 is carried by the vehicle via a crane 4 and is here a so-called one grip harvesting arrangement, i.e. an arrangement adapted to grip a standing tree, cut it, lay the tree down to horizontal position and then by means of feeding means drive the log through the arrangement while simultaneously branching the log. The log may be cross-cut into individual pieces of timber by means of the cutting device. It is emphasised in this respect that the present invention is just as well applicable to cases in which there is a desire to refrain from branching of the log, i.e. where it is only cross-cut into pieces of timber. However, the invention is also applicable to a so-called full log handling, i.e. where the harvesting arrangement is utilised so as to cut the tree off and fell it, but after which no cross-cutting of the log into smaller pieces is carried out. In such a case, the expression "piece of timber" used in the claims is intended to cover also the log as a whole. The harvesting arrangement may if so desired be provided with branching means so as to relieve the log from branches by driving the log through the arrangement also in full log handling.

A position determining device, generally denoted by 5, capable of determining the position of the harvesting machine by means of external, wirelessly receivable signals is arranged on the harvesting machine. It is preferred that the position determining device operates according to the GPS-system (GPS = Global Positioning System). This is a satellite based positioning system creating conditions for a very high accuracy with respect to position determination. The satellite signals are in the reality disturbed. The disturbances are in the practise corrected by means of signals emitted from a ground station. These signals are received by the position determining device and may together with the satellite signals result in the very high position determining accuracy aimed at.

Fig 1 illustrates a variant where the position determining device comprises two position determining units 6 and 6', respectively, preferably in the form of GPS-units. As can be seen, the unit 6 is arranged on the vehicle cabin, whereas the unit 6' is located on the crane 4. The presence of two such position determining units, which suitably are connected to a computer arrangement 7 located in the harvesting machine and capable of a evaluating signals from the units 6 and 6' for position determining purposes, implies that the direction of the crane always can be determined, also during movement. This embodiment also has a distance meter 8 for measuring the distance between the tree that is to be felled and a part 9 of the crane 4 that is solely turnably moveable with respect to the vehicle 2. With the aid of these components 6-8, the distance and the direction of the arrangement 3 from the unit 6 can be determined with very high accuracy, whereby the position for the place where the piece of timber leaves the arrangement 3 can be determined. Normally a piece of timber discharged from the arrangement will fall straight downwards due to its weight and will remain laying without rolling sideways to any appreciable extent. A piece of timber will consequently remain laying vertically below the location where it has been dropped. Therefor, the position of the arrangement in the moment of discharge constitutes a relatively good estimation of the position of the discharged piece of timber.

By this way of registering the position of the harvesting arrangement in connection with the discharge of a piece of timber, the position of the piece of timber can be determined with a relatively high accuracy. In case a lower accuracy in the position of the piece of timber can be accepted by the user of the system, it may be sufficient to only determine the position of the vehicle 2 included in the harvesting machine 1 and use this position determination as a rough estimation of the position of the discharged piece of timber. If so desired, the position determining device can also be arranged separately from the harvesting machine itself. Besides, the harvesting machine can of course have other configurations than what is shown in fig 1. Within the scope of the inventional idea, also other ways and means than the above mentioned can be used for determination of the position of the harvesting machine or the harvesting arrangement. In the extreme case, one may be content with a very rough position determination that identifies the geographical area within which a harvesting is carried out. In the latter case, all the pieces of timber obtained by harvesting within the area are allotted one and the same position information.

A so-called cross-cutting computer is in fig 1 denoted by 10. The computer arrangement as a whole one the harvesting machine is denoted by 7. In addition to the cross-cutting computer 10, the computer arrangement comprises a further computer 11 adapted to generate, on the basis of information obtained from the component 6-8, a position information corresponding to the actual position of the harvesting arrangement. Position information related to the place of discharge of a piece of timber is stored in a data base, for instance in the computer 11.

As the harvesting operation proceeds, the cross-cutting computer 10 registers data characteristic for the pieces of timber, for instance regarding quality and size. Information about for instance quality and size of a piece of timber can for instance be obtained by analysis of the end surface of the piece of timber via equipment, arranged on the harvesting machine, comprising a device, schematically indicated at 12 in fig 1, arranged on the harvesting arrangement for detecting or digitally reproducing said end surface. If the end surface is reproduced, said information can be obtained by analysis or processing of the digital image. The term "detection" here refers to registration of radiation emitted or reflected from the end surface of the piece of timber for the purpose of generating data characteristic for the piece of timber. Consequently, detection device refers to a device for registration of radiation emitted or reflected from the end surface of the piece of timber. The registered radiation is then analysed in a suitable manner so as to obtain the data characteristic for the piece of timber. Analysis of annual ring pattern can for instance give information about the quality of the piece of timber. The diameter of the piece of timber can for instance be obtained in a conventional manner by measuring members connected to the gripping members of the harvesting arrangement, and the length of piece of timber by a conventional measuring roll arranged on the harvesting arrangement. Information about the diameter and length of the piece of timber can also be obtained by suitable scanning equipment. Said data can of course also be obtained by other equipment and technique than here mentioned. On the basis of obtained length and diameter values, the volume of the piece of timber can be calculated and by multiplication with the density of the sort of wood the weight of the piece of timber can be obtained.

Position information related to the place of discharge of the piece of timber is stored in a data base, for instance in the computer 11, and is associated to the data characteristic for the piece of timber registered by the cross-cutting computer.

In the example shown in fig 1, the computer 11 and possibly also the cross-cutting computer 10 are arranged to communicate wirelessly via a transmitter/receiver 14 connected to an antenna 15, with a transmitter/receiver 16, which also has an antenna 17 and which is connected to a base computer 19 included in a second computer arrangement 18. Consequently, data are wirelessly transferable to the base computer from the computer 11 on the harvesting machine. Data received by the base computer 19 is stored in one or more data bases belonging to one or more second computer arrangements 18. Such second computer arrangements 18 may be distributed in a suitable number over the country. An operating centre 20 is indicated as connected to the base computer 19. Thus, the operating centre 20 may receive, from the base computer, data required for evaluation and control purposes. 21 denotes a forest planning unit, i.e. a unit intended to feed, to the base computer 19, forest maps, harvesting plants etc. These may then be delivered to the harvesting machine wirelessly and may be used for guiding the driver of the harvesting machine, for instance via a viewing screen 22. In fig 1, it is also indicated how a satellite 23 can be utilised in order to achieve communication between the base computer 19 and the computer arrangement 7 on the harvesting machine.

In the base computer 19, the position information indicating the place of discharge of a piece of timber is associated to a geographical data base comprising a set of points or surfaces with given position co-ordinates, preferably a so-called GIS data base. A geographical area represented in the geographical data base is reproduced in the form of a map image on a viewing screen included in a display unit, for instance arranged in the operating centre 20, the place corresponding to the latest position information of the piece of timber being indicated on the map image. In this way, it will from the operating centre 20 be possible to determine where in the terrain pieces of timber are to be found. Since said position information is associated to the data characteristic for the piece of timber, it will also be possible from the operating centre 20 to determine for instance quality and size of the pieces of timber indicated on the map image. In order to facilitate the clearness, the piece of timber is suitably represented on the map image by a symbol associated to the data characteristic for the piece of timber, said symbol being shown on the place of the map image corresponding to the latest stored position information of the piece of timber. A certain symbol can for instance represent a piece of timber of a predetermined quality or size. The symbols can in this connection have different shape and/or colour depending on the quality or size of the piece of timber. The symbols could also be constituted by or complemented with alphanumeric characters. Furthermore, the system could be so adapted that information regarding for instance quality and/or size of a piece of timber indicated on the map image was shown on the viewing screen. The control of the information display could for instance be carried out by clicking with the aid of a conventional computer mouse on an individual piece of timber indicated on the map image, information regarding the piece of timber in question appearing on the viewing screen.

In the inventional system, also the machines that handles the piece of timber during its transport from the harvesting place to the final customer are provided with a display unit connected to the geographical data base, which in the shown example is located in the base computer 19, and a position determining device. Said machines comprise for instance forwarders, for fetching harvested pieces of timber and further transportation of these to a storing place, and transport vehicles such as lorries for transportation of the pieces of timber from said storage place to for instance a final customer.

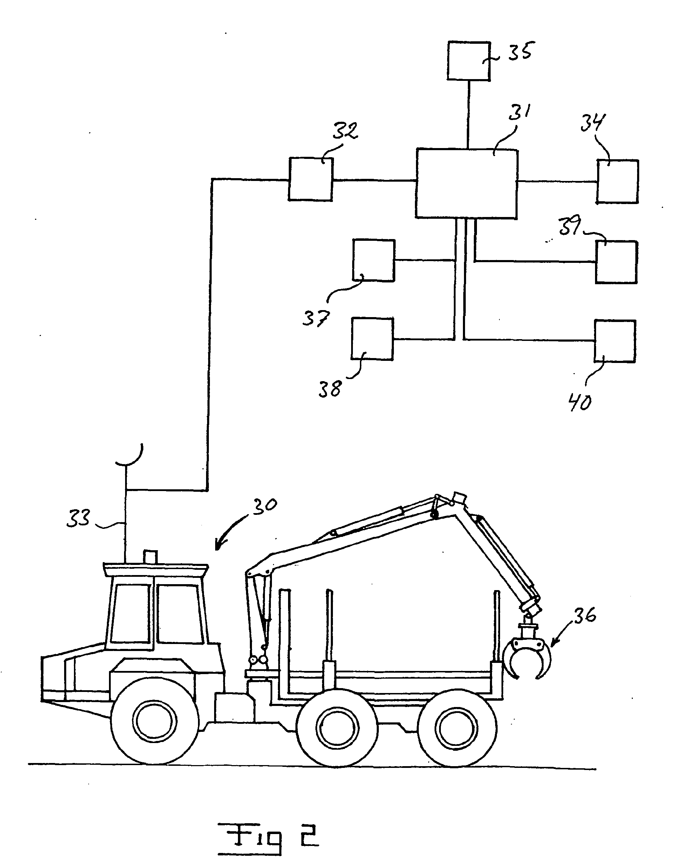

In fig 2 said machines are exemplified by a forwarder 30. In the example shown, a computer arrangement 31 arranged in the forwarder is adapted to communicate wirelessly, via a transmitter/receiver 32 connected to an antenna 33, with a base computer 19 via the transmitter/receiver 16 of the base computer. Consequently, data are wirelessly transmittable from the base computer 19 to the computer arrangement 31 on the forwarder. A viewing screen 34 is connected to the computer arrangement 31, via which viewing screen the previously mentioned map image with pieces of timber indicated thereon can be shown for the driver of the forwarder. Furthermore, the driver can via the viewing screen 34 receive information from the operating centre 20 regarding which pieces of timber or which type of pieces of timber that are to be fetched and where these are to be discharged. With the aid of the map image shown on the viewing screen 34 the driver gets information about where the pieces of timber in question are to be found, and via the viewing screen 34 the driver can also get information about quality, size, etc. of the pieces of timber laying in the area. By for instance a computer mouse 39 connected to the computer arrangement 31, the machine driver can mark a piece of timber indicated on the viewing screen 34 so as thereby to control the computer arrangement 31 to show information on the viewing screen 34 regarding said piece of timber.

The showing on the viewing screen 34 of pieces of timber located in a certain area could be initiated automatically when the machine 30 drives into the area. The system is suitably adapted so that it can be controlled such that only pieces of timber of for instance a certain demanded quality are indicated on the map image shown via the viewing screen 34.

The forwarder 30 is provided with a position determining device 35 of a type similar to the one previously described in connection with the harvesting machine. The computer arrangement 31 is adapted to generate, on the basis of information obtained from components included in the position determining device 35, a position information corresponding to the present position of the gripping members 36 of the forwarder. When a certain piece of timber is lifted by said gripping members 36, this is registered by the computer arrangement 31, either with the aid of the driver via some kind of manually manoeuvred control member or automatically as will be described in the following. When the piece of timber is then discharged, the position of the gripping members 36 is registered, which position consequently will correspond to the new place of discharge of the piece of timber. Position information related to the new place of discharge of the piece of timber is stored in a data base, for instance in the computer arrangement 31, and/or communicated to the base computer 19. The new position information is associated to the data characteristic for the piece of timber, either directly or via the previously stored position information. In this manner, an updated position information regarding the place where the piece of timber is to be found is obtained.

In the next step in the transport chain said position information is updated in the corresponding way. It is emphasised that also the updating position information can be more or less accurate according to requirements.

The registration that a certain piece of timber has been fetched may as mentioned above take place automatically. The automatic identification is suitably based on the position information of the piece of timber and the determined position of the gripping members of the forwarder in the fetching moment. The computer arrangement 31 is in this connection adapted to compare said gripping member position with stored position information regarding pieces of timber located in the area in question. If a piece of timber lifted by the forwarder does not lay too close to any other of the pieces of timber located in the area, the piece of timber in question can with good certainty be identified in this way, if however there are pieces of timber in close vicinity to the lifted piece of timber further parameters may be required in order to identify the piece of timber in question with certainty. If the weight of the pieces of timber is known, the computer arrangement 31 can for instance be adapted to receive information, via suitable sensors 37, regarding the weight of the piece of timber lifted by the gripping members of the forwarder. The detected weight is then compared with stored data regarding the weight of pieces of timber located in the area in question so as to determine the identity of the piece of timber. The automatic identification of the pieces of timber could also be based on stored values regarding the size of the pieces of timber, for instance diameter and/or length values, which of course requires that the forwarder is provided with means 38 for determination of the size of a lifted piece of timber. The diameter of a piece of timber can for instance be determined by sensors detecting the displacement position of one or several arms included in the gripping members when the piece of timber is gripped by said gripping members. Furthermore, the diameter and/or length of a piece of timber may be determined by scanning equipment arranged in connection with the gripping members. Determined values of diameter and length of a piece of timber may of course also be used for calculation of the weight of the piece of timber in question. The computer arrangement 31 is in this connection programmed to automatically perform an identification of a piece of timber lifted by the gripping members of the forwarder in one or several of the above mentioned ways when it from sensors arranged on the forwarder receives information that the gripping members 36 perform a lifting operation and to register that the identified piece of timber has been fetched. The computer arrangement 31 is further programmed to automatically store new position information regarding an identified piece of timber when it via sensors receive information that the load carried by the forwarder has been discharged. In this way, the position information of the piece of timber can consequently be updated.

When the piece of timber is discharged from the forwarder it is normally placed in a log pile, for instance together with pieces of timber of corresponding quality, and it can then for reasons of rationality be suitable to treat the individual piece of timber as included in a larger unit. When the log pile is fetched and discharged on a new place by a lorry, which is provided with a position determining device, computer arrangement and display unit of the same type as the forwarder, the position information for all pieces of timber included in the log pile is updated. Anywhere in the transport chain an identification of a piece of timber, for instance based on position, weight and/or seize, can be performed in previously mentioned manner. This identification can be used in order to control the reliability of the system and/or in order to correct the position information stored in the data base.

The above described system can if so desired be "refined" by a more accurate determination of the position for the individual pieces of timber. If the position of the pieces of timber is known with a very high accuracy it will be possible to use a GIS data base with a very high resolution, i.e. a very finally-divided GIS data base. If the shape and position of the piece of timber is known with high accuracy, the position for the centre of gravity of the piece of timber can for instance be determined and used for identification of a certain piece of timber. In this connection a GIS data base which is so finally-divided that the centres of gravity of pieces of timber lying close to each other all can be related to different points/surfaces of the GIS data base is used. By zooming in on the map image shown on the display unit, individual pieces of timber indicated on the map image can consequently be identified even though these are laying very closely. For this to function in the practise, the harvesting machine as well as the fetching machines must of course be provided with equipment that make possible a precise position determination of the centre of gravity of the pieces of timber. Such equipment could for instance comprise video and laser scanner mounted commonly in a moveable holder, in which case the adjustment of the video and the laser scanner in relation to the forest machine, which is position determined by the previously mentioned position determining device, for instance could be determined by gyros connected to the holder. By said video and laser scanner, the part of the terrain in which the pieces of timber are located can be reproduced with high accuracy, and by suitable processing of the signals obtained from the video and the laser scanner the shape and position of the pieces of timber can be determined, whereby the position of the centre of gravity of every piece of timber also can be calculated. For calibration, the video may with advantage be provided with a photogrametric measuring plate in the form of a glass plate between its lens and its photocells, which glass plate is provided with an inscribed bar pattern or inscribed measuring crosses.

According to a preferred embodiment of the invention, the position determining device 5 arranged on the harvesting machine is used for determination of the growth location of a tree in connection with the felling of the tree by the harvesting machine, the position information indicating the place of discharge of the piece of timber being associated to the position information indicating the growth location of the tree from which the piece of timber is obtained. In this way, the place of origin of a piece of timber identified later in the transport chain can be determined with high accuracy. The growth location can according to requirements be determined with desired accuracy. In one of the extreme cases the growth location is determined with such a high accuracy that the precise place of origin of an individual piece of timber can be determined and distinguished from places of origin of pieces of timber originating form adjacent trees. In the other of the extreme cases the position information indicating the growth location only identifies a geographical area from which the piece of timber originates. It is in this connection realised that the position information indicating where the piece of timber is discharged from the harvesting machine in the latter case normally will correspond to the position information that indicates the "growth location" of the piece of timber.

Furthermore, the harvesting machine can be provided with a marking device, schematically indicated at 13 in fig 1, for applying a marking on the piece of timber, by means of which the "growth location" of the piece of timber can be determined. The marking can be constituted by the position information indicating the growth location or a code, by means of which the piece of timber is associatable the position information that is stored in a data base and indicates the growth location. It is emphasised that the marking also can have the character of electronic marking objects, for instance in the form of transponders or blue tooth chips, which are applied on the piece of timber. such marking objects can have a unique identification (= code) and can also be charged with position data, data from the cross-cutting computer of the harvesting machine and other desired data. An advantage with electronic marking objects is that the reading of the marking is considerably facilitated. In its simplest form, said marking can consist of a colour marking indicating that a piece of timber originates from a certain geographical area without more closely identifying the precise "growth location" of the piece of timber within said area.

The marking device 13 can for instance be adapted to apply said marking on any of the ways described in the above mentioned WO 99/23873 A1 or in the Swedish patent application SE 0002916-5 of the applicant. In this connection, the system comprises a computer arrangement, for instance the previously mentioned computer arrangement 7, which is adapted to control the marking device 13 to, on the basis of position information obtained from the position determining device 5, mark the piece of timber with said marking, preferably in the form of a code.

Anywhere in the transport chain said marking can be read in order to check whether the piece of timber identified by the reading is located on a place corresponding to the latest stored position information that indicates the place of discharge of the piece of timber. In this connection, the reading is suitably carried out by a position determined reading device. The construction of the reading device will of course depend on the type of the marking. For instance, if the marking consists of a bar code applied on the piece of timber a bar code reader is used. In case of an established deviation between the real and the stored position of an identified piece of timber, the position information indicating the place of discharge of the piece of timber can be corrected so that it corresponds to the position information corresponding to the determined position of the reading device. The machines that fetch the pieces of timber could be provided with a reading device 40 of said type in order to perform said check. With the aid of such a reading device 40 arranged on a machine 30, identification of fetched pieces of timber provided with a marking can also be performed in order to make possible an automised method of previously mentioned type for updating of the position information indicating the place of discharge of the piece of timber. Such a reading device 40 is suitably arranged in connection with the gripping members 36 of the machine and is suitably position determined by the previously mentioned position determining device 35.

The identification of marked pieces of timber can also be carried out by reproducing, by means of a reproduction device, the end surfaces of pieces of timber located for instance in a log pile at the same time as the position of the log pile is determined by suitable position determining means, the reproduction then being analysed by image processing for identification of markings appearing on the reproduction.

In order to facilitate the fetching of pieces of timber of a certain selection, the pieces of timber can with advantage be provided with a quality indicating marking, for instance a colour marking, in connection with the harvesting.

According to a preferred embodiment of the invention, the present positions of the machines included in the above mentioned timber handling are also indicated on said map image, which facilitates the control of the timber flow. In this connection, all machines should have the same time information. Suitably, a technique known per se is used, according to which all machines will get the same GPS-time and time gaps in the transmission of GPS-signals are used in order to exchange, between the machines, data packs identifying the respective machine and its position. It is emphasised that the system also can comprise the machines, such as for instance industrial trucks, that handles the pieces of timber after they have arrived at for instance the timber stockyard of a saw mill, whereby the latest place of discharge of the pieces of timber within said stockyard can be determined. In this connection, also these machines have suitable position determining means and where appropriate means of for instance above mentioned type for identification of pieces of timber.

It is emphasised that the invention is not only limited to the embodiments described above. It is generally pointed out that many modifications are offered for the man skilled in the art once the basic idea of the invention has been presented.

## Claims

1. A method for handling pieces of timber, wherein data characteristic for a piece of timber obtained by forest harvesting by means of a harvesting machine (1) is determined by means of equipment (12) arranged on the harvesting machine and is stored in a data base, wherein the position for the place where the piece of timber is discharged by the harvesting machine (1) is determined by means of position determining means (5) and is stored as position information in a data base associated to the data characteristic for the piece of timber, **characterized in that** said position information is updated, as the piece of timber in connection with subsequent handling is moved, by registering that the piece of timber has been fetched from the place corresponding to the latest stored position information and determining by means of position determining means (35) the position for the place where the piece of timber is subsequently discharged, the last mentioned position being stored as position information in a data base associated to the data characteristic for the piece of timber.

2. A method according to claim 1, ***characterized* in that** updating position information is associated to previous position information stored for the piece of timber.

3. A method according to claim 1 or 2, ***characterized* in that** the position information is associated to a geographical data base comprising a set of points or surfaces with given position co-ordinates.

4. A method according claim 3, ***characterized* in that** a geographical area represented in the geographical data base is reproduced in the form of a map image on a display unit (34), the place corresponding to the latest position information of the piece of timber being indicated on the map image.

5. A method according to claim 4, ***characterized* in that** the piece of timber is represented on the map image by a symbol associated to the data characteristic for the piece of timber, said symbol being displayed on the place on the map image corresponding to the latest stored position information of the piece of timber.

6. A method according to claim 5, wherein the data characteristic for the piece of timber comprises information about the quality of the piece of timber, ***characterized* in that** a certain symbol represents a piece of timber of a predetermined quality.

7. A method according to claim 5 or 6, wherein the data characteristic for the piece of timber comprises information about the size of the piece of timber, ***characterized* in that** a certain symbol represents a piece of timber of a predetermined size.

8. A method according to any of claims 4-7, ***characterized* in that** the display unit (34) can be controlled to show information concerning a certain piece of timber indicated on the map image, said information being obtained from the data characteristic for the piece of timber.

9. A method according to any of the preceding claims, ***characterized* in that** the position determining means (5, 35) operate according to the GPS-system (GPS = Global Positioning System).

10. A method according to any of the preceding claims, ***characterized* in that** the position for the growth location of a tree is determined in connection with the felling of the tree by the harvesting machine, position information corresponding to the growth location being stored in a data base, and that the position information indicating the place of discharge of the piece of timber is associated to the position information indicating the growth location of the tree from which the piece of timber is obtained.

11. A method according to claim 10, ***characterized* in that** the harvesting machine (1) is provided with a marking device (13), by means of which the piece of timber is marked with the position information indicating the growth location or a code, by means of which the piece of timber is associatable to the position information that is stored in a data base and indicates the growth location.

12. A method according to claim 11, ***characterized* in that** the marking is read by means of a position determined reading device (40) so as to control and/or correct the position information indicating the place of discharge of the piece of timber.

13. A method according to any of the preceding claims, wherein the data characteristic for the piece of timber comprises information about the size of the piece of timber, ***characterized* in that** the size of the piece of timber is detected in connection with the fetching of the piece of timber, the detected size being compared to stored size values so as to determine the identity of the piece of timber that has been fetched.

14. A method according to any of the preceding claims, wherein the data characteristic for the piece of timber comprises information about the weight of the piece of timber, ***characterized* in that** the weight of the piece of timber is detected in connection with the fetching of the piece of timber, the detected weight being compared to stored weight values so as to determine the identity of the piece of timber that has been fetched.

15. A method according to claim 11, ***characterized* in that** the marking of the piece of timber is read in connection with the fetching thereof so as to determine the identity of the piece of timber that has been fetched.

16. A method according to any of claims 13-15, ***characterized* in that** the fetching and discharging of the identified piece of timber is automatically registered by a computer arrangement (31), which computer arrangement is adapted to automatically register and store the position information indicting the place of discharge of the piece of timber.

17. A system for handling pieces of timber, including harvesting by means of a harvesting machine (1) comprising a vehicle (2) and a harvesting arrangement (3) mounted thereon, the system comprising position determining means (5) for determining the position of the harvesting machine and means (12, 17) for determining and storing in a data base data characteristic for a piece of timber obtained by harvesting by means of the harvesting machine (1), wherein the system comprises means (7) for storing position information, determined by the position determining means (5), corresponding to the position for the place where the piece of timber is discharged by the harvesting machine (1), said means (7) being adapted to store this position information in a data base associated to the data characteristic for the piece of timber, **characterized in that** the system further comprises means (31, 35, 37, 38) for updating said position information as the piece of timber is moved in connection with subsequent handling, said updating means (31, 35, 37, 38) being adapted to register that the piece of timber is fetched from the place corresponding to the latest stored position information and further comprise position determining means (35) for determining the position for the place where the piece of timber is subsequently discharged, said updating means (31 ,35, 37, 38) further comprising means (31) for storing position information corresponding to the last-mentioned position, said storing means (31) being adapted to store this position information in a data base associated to the data characteristic for the piece of timber.

18. A system according to claim 17, ***characterized* in that** the means (31) for storing of updating position information is adapted to store this position information so that it is associated to previously stored position information for the piece of timber.

19. A system according to claim 17 or 18, ***characterized* in that** the system comprises a geographical data base having a set of points or surfaces with given position co-ordinates.

20. A system according to claim 19, ***characterized* in that** the system comprises a display unit (34) connected to the geographical data base, which display unit is adapted to reproduce a geographical area represented in the geographical data base in the form of a map image.

21. A system according to claim 20, ***characterized* in that** the system comprises means for generating a symbol associated to the data characteristic for the piece of timber, said symbol being displayed on the place on the map image corresponding to the latest stored position information of the piece of timber.

22. A system according to claim 21, wherein the data characteristic for the piece of timber comprises information about the quality of the piece of timber, ***characterized* in that** a certain symbol is adapted to represent a piece of timber of a predetermined quality.

23. A system according to claim 21 or 22, wherein the data characteristic for the piece of timber comprises information about the size of the piece of timber, ***characterized* in that** a certain symbol is adapted to represent a piece of timber of a predetermined size.

24. A system according to any of claims 20-23, ***characterized* in that** the system comprises means (39) with the aid of which the display unit (34) can be controlled to show information concerning a certain piece of timber indicated on the map image, said information being obtained from the data characteristic for the piece of timber.

25. A system according to any of claims 17-24, ***characterized* in that** the position determining means (5, 35) operates according to the GPS-system (GPS = Global Positioning System).

26. A system according to any of claims 17-25, ***characterized* in that** the system comprises position determining means (5) for determining the position for the growth location of a tree in connection with the felling of the tree by the harvesting machine, and that the system comprises means (7) for storing position information corresponding to said growth location in a data base, the means (7) for storing the position information indicating the place of discharge of the piece of timber being adapted to store this position information so that it is associated to the position information indicating the growth location of the tree from which the piece of timber is obtained.

27. A system according to claim 26, ***characterized* in that** the harvesting machine (1) is provided with a marking device (13) adapted to apply on a piece of timber obtained from a tree a marking comprising the position information indicating the growth location or a code, by means of which the piece of timber is associatable to the position information that is stored in a data base and indicates the growth location.

28. A system according to claim 27, ***characterized* in that** the harvesting machine (1) is provided with a computer arrangement (7) adapted to control the marking device (13) to mark the piece of timber, on the basis of position information concerning the determined growth location of the tree, with the position information or code indicating the growth location.

29. A system according to claim 27 or 28, ***characterized* in that** the system comprises a position determined reading device (40), which is adapted, by reading the marking, to control and/or correct the position information indicating the place of discharge of the piece of timber.

30. A system according to any of claims 17-29, wherein the data characteristic for the piece of timber comprises information about the size of the piece of timber, ***characterized* in that** the system comprises appliances (30) for handling and moving pieces of timber, which appliances (30) comprise means (38) for detecting the size of the piece of timber in connection with the fetching of the piece of timber by the respective appliance, and that the system comprises means (31) for comparing the detected size with stored size values so as to determine the identity of the piece of timber that has been fetched.

31. A system according to any of claims 17-30, wherein the data characteristic for the piece of timber comprises information about the weight of the piece of timber, ***characterized* in that** the system comprises appliances (30) for handling and moving pieces of timber, which appliances comprise means (37) for detecting the weight of the piece of timber in connection with the fetching of the piece of timber by the respective appliance, and that the system comprises means (31) for comparing the detected weight with stored weight values so as to determine the identity of the piece of timber that has been picked up.

32. A system according to claim 27 or 28, ***characterized* in that** the system comprises appliances (30) for handling and moving pieces of timber, which appliances comprise means (40) for reading the marking of the piece of timber in connection with the fetching of the piece of timber by the respective appliance (30) so as to determine the identity of the piece of timber that has been fetched.

33. A system according to any of claims 30-32, ***characterized* in that** the system comprises a computer arrangement (31), which is adapted to automatically register the fetching and the discharging of the identified piece of timber and register and store the position information indicating the place of discharge of the piece of timber.

## Patentansprüche

1. Verfahren zur Handhabung von Holzklötzen, bei dem Daten, die für bei der Waldarbeit mit Hilfe einer Erntemaschine (1) gewonnene Holzklötze charakteristisch sind, mit Hilfe einer Einrichtung (12) festgestellt werden, die an der Erntemaschine angeordnet ist, und die in einer Datenbank gespeichert werden, wobei die Position für die Stelle, an der der Holzklotz von der Erntemaschine (1) abgegeben wird, mit Hilfe einer Positions-Bestimmungsvorrichtung (5) festgelegt und als Positions-Information in einer Datenbank gespeichert wird, die den für den Holzklotz charakteristischen Daten zugeordnet ist, **dadurch gekennzeichnet, dass** die Positions-Information aktualisiert wird, wenn der Holzklotz im Zuge der anschließenden Handhabung bewegt wird, indem registriert wird, dass der Holzklotz von der Stelle, die der zuletzt gespeicherten Positions-Information entspricht, aufgenommen wird, und dass mit Hilfe einer Positions-Bestimmungsvorrichtung (35) die Position für die Stelle, an der der Holzklotz anschließend abgegeben wird, bestimmt wird, wobei diese letzterwähnte Position als Positions-Information in einer Datenbank gespeichert wird, die der Datencharakteristik für den Holzklotz zugeordnet ist.

2. Verfahren nach Anspruch 1, **dadurch gekennzeichnet, dass** das Aktualisieren von Positions-Informationen vorhergehenden Positions-Informationen, die für den Holzklotz gespeichert sind, zugeordnet wird.

3. Verfahren nach Anspruch 1 oder 2, **dadurch gekennzeichnet, dass** die Positions-Informationen einer geographischen Datenbank zugeordnet werden, die einen Satz von Punkten oder Oberflächen mit gegebenen Positions-Koordinaten enthält.

4. Verfahren nach Anspruch 3, **dadurch gekennzeichnet, dass** ein geographischer Bereich, der in der geographischen Datenbank dargestellt ist, in Form eines Kartenbildes auf einer Display-Einheit (34) reproduziert wird, und die der letzten Positions-Information entsprechende Stelle des Holzklotzes auf dem Kartenbild dargestellt wird.

5. Verfahren nach Anspruch 4, **dadurch gekennzeichnet, dass** der Holzklotz auf dem Kartenbild als ein Symbol dargestellt wird, das der Datencharakteristik für den Holzklotz zugeordnet ist, wobei das an der jeweiligen Stelle auf dem Kartenbild dargestellte Symbol der letzten gespeicherten Positionsinformation des Holzklotzes entspricht.

6. Verfahren nach Anspruch 5, bei dem die Datencharakteristik für den Holzklotz Informationen über die Qualität des Holzklotzes enthält, **dadurch gekennzeichnet, dass** ein bestimmtes Symbol einen Holzklotz vorbestimmter Qualität darstellt.

7. Verfahren nach Anspruch 5 oder 6, bei dem die Datencharakteristik für den Holzklotz Informationen über die Größe des Holzklotzes enthält, **dadurch gekennzeichnet, dass** ein bestimmtes Symbol einem Holzklotz vorbestimmter Größe entspricht.

8. Verfahren nach einem der Ansprüche 4 - 7, **dadurch gekennzeichnet, dass** die Display-Einheit (34) so gesteuert werden kann, dass sie Informationen betreffend einen bestimmten Holzklotz auf dem Kartenbild zeigt, wobei diese Informationen aus der Datencharakteristik für den Holzklotz erhalten werden.

9. Verfahren nach einem der vorausgehenden Ansprüche, **dadurch gekennzeichnet, dass** die Positions-Bestimmungsvorrichtung (5, 35) nach dem GPS-System (GPS =Global Positioning System) arbeitet.

10. Verfahren nach einem der vorausgehenden Ansprüche, **dadurch gekennzeichnet, dass** die Position für den Standplatz eines Baumes in Verbindung mit dem Fällen des Baumes durch die Erntemaschine bestimmt wird, die Positions-Informationen, die dem Standsplatz entsprechen, in einer Datenbank gespeichert werden, und die Positionsinformationen, die die Stelle der Abgabe des Holzklotzes anzeigen, den Positions-Informationen zugeordnet sind, die den Standplatz des Baumes angeben, von dem der Holzklotz stammt.

11. Verfahren nach Anspruch 10, **dadurch gekennzeichnet, dass** die Erntemaschine (1) eine Markiervorrichtung (13) aufweist, mit deren Hilfe der Holzklotz so markiert wird, dass die Positions-Informationen, die den Standplatz oder einen Code angeben, mit dessen Hilfe der Holzklotz den Positions-Informationen zugeordnet werden kann, die in einer Datenbank gespeichert sind und den Standplatz angeben.

12. Verfahren nach Anspruch 11, **dadurch gekennzeichnet, dass** die Markierung mit Hilfe einer durch die Position bestimmten Lesevorrichtung (40) ausgelesen wird, derart, dass die Positions-Informationen, die den Platz der Abgabe des Holzklotzes angeben, gesteuert und/oder korrigiert werden.

13. Verfahren nach einem der vorausgehenden Ansprüche, bei dem die Datencharakteristik für den Holzklotz Informationen über die Größe des Holzklotzes angibt, **dadurch gekennzeichnet, dass** die Größe des Holzklotzes in Verbindung mit dem Aufnehmen des Holzklotzes bestimmt wird, wobei die so bestimmte Größe mit gespeicherten Größenwerten verglichen wird, damit die Identität des Holzklotzes, der aufgenommen worden ist, festgestellt werden kann.

14. Verfahren nach einem der vorausgehenden Ansprüche, bei dem die Datencharakteristik für den Holzklotz Informationen über das Gewicht des Holzklotzes enthält, **dadurch gekennzeichnet, dass** das Gewicht des Holzklotzes in Verbindung mit dem Abgeben des Holzklotzes detektiert wird, wobei das detektierte Gewicht mit gespeicherten Gewichtswerten verglichen wird, um die Identität des aufgenommenen Holzklotzes zu bestimmen.

15. Verfahren nach Anspruch 11, **dadurch gekennzeichnet, dass** das Markieren des Holzklotzes in Verbindung mit dem Aufnehmen des Holzklotzes ausgelesen wird, wodurch die Identität des aufgenommenen Holzklotzes bestimmt wird.

16. Verfahren nach einem der Ansprüche 13-15, **dadurch gekennzeichnet, dass** das Aufnehmen und Abgeben des identifizierten Holzklotzes automatisch durch eine Computeranordnung (31) registriert wird, die in der Lage ist, die Positions-Informationen automatisch zu registrieren und zu speichern, um die Abgabestelle des Holzklotzes anzuzeigen.

17. Anordnung zum Handhaben sowie Ernten von Holzklötzen mit einer Erntemaschine (1), die ein Fahrzeug (2) und eine darauf befindliche Ernteeinrichtung (3) umfasst, mit einer Positions-Bestimmungsvorrichtung (5) zum Bestimmen der Position der Erntemaschine und einer Vorrichtung (12, 17) zur Bestimmung und Speicherung von in einer Datenbank enthaltenen Daten, die charakteristisch für einen Holzklotz sind, der durch Ernten mit Hilfe der Erntemaschine (1) gewonnen wird, wobei die Anordnung eine Vorrichtung (7) zur Speicherung von Positions-Informationen aufweist, die durch die Positions-Bestimmungsvorrichtung (5) entsprechend der Position für die Stelle, an der der Holzklotz von der Erntemaschine (1) abgegeben wird, bestimmt werden, und die in der Lage ist, diese Positions-Informationen in einer Datenbank zu speichern, die den für den Holzklotz charakteristischen Daten zugeordnet ist, **dadurch gekennzeichnet, dass** die Anordnung ferner eine Vorrichtung (31, 35, 37, 38) zum Aktualisieren der Positionsinformationen aufweist, wenn der Holzklotz in Verbindung mit der anschließenden Handhabung bewegt wird, dass die Aktualisierungsvorrichtung (31, 35, 37, 38) so ausgelegt ist, dass sie registriert, wenn der Holzklotz von der Stelle entsprechend der letzten gespeicherten Positionsinformation aufgenommen wird und dass eine Positions-Bestimmungsvorrichtung (35) zur Bestimmung der Position für die Stelle, an der der Holzklotz anschließend abgegeben wird, bestimmt wird, und dass die Aktualisierungsvorrichtung (31, 35, 37, 38) eine Vorrichtung (31) zur Speicherung von Positionsinformationen entsprechend der letzterwähnten Position aufweist und diese Speichervorrichtung (31) diese Positions-Informationen in einer Datenbank speichert, die der Datencharakteristik für den Holzklotz zugeordnet ist.

18. Anordnung nach Anspruch 17, **dadurch gekennzeichnet, dass** die Vorrichtung (31) zum Speichern von Aktualsierungs-Positions-Informationen diese Positions-Informationen so speichert, dass sie den vorausgehend gespeicherten Positions-Informationen für den Holzklotz zugeordnet sind.

19. Anordnung nach Anspruch 17 oder 18, **dadurch gekennzeichnet, dass** sie eine geographische Datenbank aufweist, die einen Satz von Punkten oder Oberflächen mit gegebenen Positions-Koordinaten besitzt.

20. Anordnung nach Anspruch 19, **dadurch gekennzeichnet, dass** sie eine Display-Einheit (34) aufweist, die mit der geographischen Datenbank verbunden ist, und die einen geographischen Bereich reproduzieren kann, der in der geographischen Datenbank in Form einer Kartenabbildung dargestellt ist.

21. Anordnung nach Anspruch 20, **dadurch gekennzeichnet, dass** sie eine Vorrichtung zur Erzeugung eines Symbols aufweist, das der Datencharakteristik für den Holzklotz zugeordnet ist, und dass das Symbol an Stelle der Kartenabbildung zur Anzeige gebracht wird, die der letzten gespeicherten Positionsinformation des Holzklotzes entspricht.

22. Anordnung nach Anspruch 21, bei der die Datencharakteristik für den Holzklotz Informationen über die Qualität des Holzklotzes enthält, **dadurch gekennzeichnet, dass** ein bestimmtes Symbol einen Holzklotz einer vorgegebenen Qualität darstellen kann.

23. Anordnung nach Anspruch 21 oder 22, bei der die Datencharakteristik für den Holzklotz Informationen über die Größe des Holzklotzes enthält, **dadurch gekennzeichnet, dass** ein bestimmtes Symbol einen Holzklotz einer vorbestimmten Größe darstellen kann.

24. Anordnung nach einem der Ansprüche 20 - 23, **dadurch gekennzeichnet, dass** sie eine Vorrichtung (39) aufweist, mit deren Hilfe die Display-Einheit (34) gesteuert werden kann, um Informationen betreffend einen bestimmten Holzklotz zu zeigen, der auf dem Kartenbild angezeigt wird, wobei die Informationen aus der Datencharakteristik für den Holzklotz erhalten werden.

25. System nach einem der Ansprüche 17 - 24, **dadurch gekennzeichnet, dass** die die Position bestimmende Vorrichtung (5, 35) nach dem GPS-System (GPS = Global Positioning System) arbeitet.

26. Anordnung nach einem der Ansprüche 17 - 25, **dadurch gekennzeichnet, dass** sie eine die Position bestimmende Vorrichtung (5) zur Bestimmung der Position für den Standplatz eines Baumes in Verbindung mit dem Fällen des Baumes mittels der Erntemaschine aufweist, und dass sie ferner eine Vorrichtung (7) zur Speicherung von Positionsinformationen entsprechend dem Standplatz in einer Datenbank besitzt, wobei die Vorrichtung (7) zur Speicherung der Positionsinformationen die Stelle für die Abgabe des Holzklotzes anzeigt, der in der Lage ist, diese Positions-Informationen so zu speichern, dass sie den Positions-Informationen zugeordnet sind, die den Standplatz des Baumes, aus dem der Holzklotz erhalten wird, anzeigen.

27. Anordnung nach Anspruch 26, **dadurch gekennzeichnet, dass** die Erntemaschine (1) mit einer Markiervorrichtung (13) versehen ist, die auf einen aus einem Baum gewonnenen Holzklotz eine Markierung aufbringt, die die Positions-Information umfasst, die den Standplatz oder einen Code anzeigt, mit dessen Hilfe der Holzklotz der Positionsinformation zugeordnet werden kann, die in einer Datenbank gespeichert ist und den Standplatz anzeigt.

28. Anordnung nach Anspruch 27, **dadurch gekennzeichnet, dass** die Erntemaschine (1) ein Computersystem (7) aufweist, das in der Lage ist, die Markiervorrichtung (13) zum Markieren des Holzklotzes auf der Basis der Positions-Informationen über den vorgegebenen Standplatz des Baumes zu steuern, wobei die Positionsinformationen oder der Code den Standplatz anzeigen.

29. Anordnung nach Anspruch 27 oder 28, **dadurch gekennzeichnet, dass** sie eine positionsabhängige Lesevorrichtung (40) aufweist, die in der Lage ist, durch Auslesen der Markierung die Positions-Informationen zu steuern und/oder zu korrigieren, die die Stelle der Abgabe des Holzklotzes anzeigen.

30. Anordnung nach einem der Ansprüche 17 - 29, bei der die Daten, die für den Holzklotz charakteristisch sind, Informationen über die Größe des Holzklotzes aufweisen, **dadurch gekennzeichnet, dass** die Anordnung Vorrichtungen (30) zum Handhaben und Verschieben von Holzklötzen aufweist, die Mittel (38) zum Detektieren der Größe der Holzklötze in Verbindung mit dem Aufnehmen der Holzklötze durch die entsprechenden Vorkehrungen detektieren, und dass die Anordnung eine Vorrichtung (31) aufweist, mit der die detektierte Größe mit den gespeicherten Dimensionswerten verglichen wird, damit die Identität der Holzklötze, die aufgenommen worden sind, bestimmt werden kann.

31. Anordnung nach einem der Ansprüche 17 - 30, bei der die für die Holzklötze charakteristischen Daten Informationen über das Gewicht der Holzklötze umfassen, **dadurch gekennzeichnet, dass** die Anordnung eine Vorrichtung (30) zum Handhaben und Verschieben von Holzklötzen aufweist, die Mittel (37) zum Detektieren des Gewichtes des Holzklotzes in Verbindung mit dem Aufnehmen des Holzklotzes durch die entsprechende Vorrichtung umfasst, und dass die Anordnung eine Vorrichtung (31) zum Vergleichen des detektierten Gewichtes mit gespeicherten Gewichtswerten besitzt, um die Identität der Holzklötze, die aufgenommen worden sind, zu bestimmen.

32. Anordnung nach Anspruch 27 oder 28, **dadurch gekennzeichnet, dass** die Anordnung Vorrichtungen (30) zum Handhaben und Bewegen von Holzklötzen aufweist, die Mittel (40) zum Auslesen der Markierung des Holzklotzes in Verbindung mit dem Aufnehmen des Holzklotzes durch die entsprechende Vorrichtung (30) umfassen, damit die Identität des Holzklotzes, der aufgenommen worden ist, bestimmt wird.

33. Anordnung nach einem der Ansprüche 30 - 32, **dadurch gekennzeichnet, dass** die Anordnung einen Computer (31) aufweist, der automatisch das Aufnehmen und Abgeben des identifizierten Holzklotzes registriert, und der ferner die Positionsinformationen registriert und speichert, die die Stelle der Abgabe des Holzklotzes anzeigt.

## Revendications

1. Procédé de manipulation de pièces de bois, dans lequel des données caractéristiques d'une pièce de bois obtenue par exploitation forestière au moyen d'une machine d'exploitation (1) sont déterminées par un moyen d'équipement (12) agencé sur la machine d'exploitation et sont stockés dans une base de données, dans lequel la position de l'endroit où la pièce de bois est déchargée par la machine d'exploitation (1) est déterminée au moyen d'un moyen de détermination de position (5) et est stockée comme informations de position dans une base de données associée aux données caractéristiques pour la pièce de bois, **caractérisé en ce que** lesdites informations de position sont mises à jour, à mesure que la pièce de bois en relation avec la manipulation ultérieure est déplacée, en enregistrant que la pièce de bois a été réceptionnée à l'endroit correspondant aux informations de position stockées les plus récentes et en déterminant au moyen d'un moyen de détermination de position (35) la position de l'endroit ou la pièce de bois est ultérieurement déchargée, la dernière position mentionnée étant stockée comme informations de position dans une base de données associée aux données caractéristiques de la pièce de bois.

2. Procédé selon la revendication 1, **caractérisé en ce que** des informations de position mises à jour sont associées à des informations de position précédentes stockées pour la pièce de bois.

3. Procédé selon la revendication 1 ou 2, **caractérisé en ce que** les informations de position sont associées à une base de données géographiques comprenant un ensemble de points ou de surfaces avec des coordonnées de position données.

4. Procédé selon la revendication 3, **caractérisé en ce qu'**une zone géographique représentée dans la base de données géographiques est reproduite sous la forme d'une image sous forme de carte sur une unité d'affichage 34, l'endroit correspondant aux informations de position les plus récentes de la pièce de bois étant indiqué sur l'image sous forme de carte.

5. Procédé selon la revendication 4, **caractérisé en ce que** la pièce de bois est représentée sur l'image sous forme de carte par un symbole associé à la caractéristique de données de la pièce de bois, ledit symbole étant affiché à l'endroit sur l'image en forme de carte correspondant aux informations de position stockées les plus récentes de la pièce de bois.

6. Procédé selon la revendication 5, dans lequel les données caractéristiques de la pièce de bois comprennent les informations sur la qualité de la pièce de bois, **caractérisé en ce qu'**un certain symbole représente une pièce de bois d'une qualité prédéterminée.

7. Procédé selon la revendication 5 ou 6, dans lequel les données caractéristiques de la pièce de bois comprennent des informations sur la taille de la pièce de bois, **caractérisé en ce qu'**un certain symbole représente une pièce de bois d'une taille prédéterminée.

8. Procédé selon l'une quelconque des revendications 4 à 7, **caractérisé en ce que** l'unité d'affichage 34 peut être commandée pour montrer les informations concernant une certaine pièce de bois indiquée sur l'image sous forme de carte, lesdites informations étant obtenues à partir des données caractéristiques de la pièce de bois.

9. Procédé selon l'une quelconque des revendications précédentes, **caractérisé en ce que** le moyen de détermination de position (535) fonctionne selon le système GPS (GPS = système de positionnement mondial).

10. Procédé selon l'une quelconque des revendications précédentes, **caractérisé en ce que** la position pour l'emplacement de croissance d'un arbre est déterminée en relation avec la chute de l'arbre par la machine d'exploitation, des informations de position correspondant à l'emplacement de croissance étant stockées dans une base de données, et **en ce que** les informations de position indiquant l'endroit de décharge de la pièce de bois sont associées aux informations de position indiquant l'emplacement de croissance de l'arbre à partir duquel la pièce de bois est obtenue.

11. Procédé selon la revendication 10, **caractérisé en ce que** la machine d'exploitation (1) est pourvue d'un dispositif de marquage (13), au moyen duquel la pièce de bois est marquée avec les informations de position indiquant l'emplacement de croissance ou en code, au moyen duquel la pièce de bois peut être associée aux informations de position qui sont stockées dans une base de données et indiquent l'emplacement de croissance.

12. Procédé selon la revendication 11, **caractérisé en ce que** le marquage est lu au moyen d'un dispositif de lecture de détermination de position (40) de façon à commander et/ou corriger les informations de position indiquant l'endroit de décharge de la pièce de bois.

13. Procédé selon l'une quelconque des revendications précédentes, dans lequel les données caractéristiques de la pièce de bois comprennent les informations sur la taille de la pièce de bois, **caractérisé en ce que** la taille de la pièce de bois est détectée en relation avec le recueil de la pièce de bois, la taille détectée étant comparée à des valeurs de taille stockées de façon à déterminer l'identité de la pièce de bois qui a été recueillie.

14. Procédé selon l'une quelconque des revendications précédentes, dans lequel les données caractéristiques de la pièce de bois comprennent les informations sur le poids de la pièce de bois, **caractérisé en ce que** le poids de la pièce de bois est détecté en relation avec le recueil de la pièce de bois, le poids détecté étant comparé à des valeurs de poids stockées de façon à déterminer l'identité de la pièce de bois qui a été recueillie.

15. Procédé selon la revendication 11, **caractérisé en ce que** le marquage de la pièce de bois est lu en relation avec son recueil de façon à déterminer l'identité de la pièce de bois qui a été recueillie.

16. Procédé selon l'une quelconque des revendications 13 à 15, **caractérisé en ce que** le recueil et la décharge de la pièce de bois identifiée sont automatiquement enregistrés par un agencement informatique (31), lequel agencement informatique est adapté pour enregistrer et stocker automatiquement les informations de position indiquant l'endroit de décharge de la pièce de bois.

17. Système pour manipuler des pièces de bois, comprenant une exploitation au moyen d'une machine d'exploitation (1) comprenant un véhicule (2) et un agencement d'exploitation (3) monté sur celui-ci, le système comprenant un moyen de détermination de position (5) destiné à déterminer la position de la machine d'exploitation et un moyen (12, 17) destiné à déterminer et stocker dans une base de données des données caractéristiques d'une pièce de bois obtenue par exploitation au moyen de la machine d'exploitation (1), dans lequel le système comprend un moyen (7) destiné à stocker des informations de position, déterminées par le moyen de détermination de position (5), correspondant à la position pour l'endroit où la pièce de bois est déchargée par la machine d'exploitation (1), ledit moyen étant adapté pour stocker ces informations de position dans une base de données associée aux données caractéristiques de la pièce de bois, **caractérisé en ce que** le système comprend en outre un moyen (31, 35, 37, 38) destiné à mettre à jour lesdites informations de position lorsque la pièce de bois est déplacée en relation avec une manipulation ultérieure, ledit moyen de mise à jour (31, 35, 37, 38) étant adapté pour enregistrer que la pièce de bois est recueillie à partir de l'endroit correspondant aux informations de position stockées les plus récentes et comprendre en outre un moyen de détermination de position (35) destiné à déterminer la position de l'endroit où la pièce de bois est ultérieurement déchargée, ledit moyen de mise à jour (31, 35, 37, 38) comprenant en outre un moyen (31) destiné à stocker des informations de position correspondant à la position mentionnée en dernier, ledit moyen de stockage (31) étant adapté pour stocker ces informations de position dans une base de données associée aux données caractéristiques pour la pièce de bois.

18. Système selon la revendication 17, **caractérisé en ce que** le moyen (31) destiné à stocker les informations de position mises à jour est adapté pour stocker ces informations de position de sorte qu'il soit associé à des informations de position précédemment stockées pour la pièce de bois.

19. Système selon la revendication 17 ou 18, **caractérisé en ce que** le système comprend une base de données géographiques ayant un ensemble de points ou surfaces avec des coordonnées de position données.

20. Système selon la revendication 19, **caractérisé en ce que** le système comprend une unité d'affichage (34) connectée à la base de données géographiques, laquelle unité d'affichage est adaptée pour reproduire une zone géographique représentée dans la base de données géographiques sous la forme d'une image sous forme de carte.

21. Système selon la revendication 20, **caractérisé en ce que** le système comprend un moyen destiné à générer un symbole associé aux données caractéristiques de la pièce de bois, ledit symbole étant affiché sur l'endroit de l'image sous forme de carte correspondant aux informations de position stockées les plus récentes de la pièce de bois.

22. Système selon la revendication 21, dans lequel les données caractéristiques de la pièce de bois comprennent les informations sur la qualité de la pièce de bois, **caractérisé en ce qu'**un certain symbole est adapté pour représenter une pièce de bois d'une qualité prédéterminée.

23. Système selon la revendication 21 ou 22, dans lequel les données caractéristiques de la pièce de bois comprennent les informations sur la taille de la pièce de bois, **caractérisé en ce qu'**un certain symbole est adapté pour représenter une pièce de bois d'une taille prédéterminée.

24. Système selon l'une quelconque des revendications 20 à 23, **caractérisé en ce que** le système comprend un moyen (39) à l'aide duquel l'unité d'affichage (34) peut être commandée pour montrer les informations concernant une certaine pièce de bois indiquée sur l'image sous forme de carte, lesdites informations étant obtenues à partir des données caractéristiques de la pièce de bois.

25. Système selon l'une quelconque des revendications 17 à 24, **caractérisé en ce que** le moyen de détermination de position (5, 35) fonctionne selon le système GPS (GPS = système de positionnement mondial).

26. Système selon l'une quelconque des revendications 17 à 25, **caractérisé en ce que** le système comprend un moyen de détermination de position (5) destiné à déterminer la position pour l'emplacement de croissance d'un arbre en relation avec la chute de l'arbre par la machine d'exploitation, et **en ce que** le système comprend un moyen (7) destiné à stocker des informations de position correspondant audit emplacement de croissance dans une base de données, le moyen (7) destiné à stocker les informations de position indiquant l'endroit de décharge de la pièce de bois étant adapté pour stocker ces informations de position de sorte qu'il est associé aux informations de position indiquant l'emplacement de croissance de l'arbre à partir duquel la pièce de bois est obtenue.

27. Système selon la revendication 26, **caractérisé en ce que** la machine d'exploitation (1) est pourvue d'un dispositif de marquage (13), adapté pour appliquer sur une pièce de bois obtenue à partir d'un arbre un marquage comprenant les informations de position indiquant l'emplacement de croissance ou en code, au moyen duquel la pièce de bois peut être associée aux informations de position qui sont stockées dans une base de données et indiquent l'emplacement de croissance.

28. Système selon la revendication 27, **caractérisé en ce que** la machine d'exploitation (1) est pourvue d'un agencement informatique (7) adapté pour commander le dispositif de marquage (13) pour marquer la pièce de bois, sur la base d'informations de position concernant l'emplacement de croissance déterminé de l'arbre, les informations de position ou un code indiquant l'emplacement de croissance.

29. Système selon la revendication 27 ou 28, **caractérisé en ce que** le système comprend un dispositif de lecture de détermination de position (40), qui est adapté, par lecture du marquage, pour commander et/ou corriger les informations de position indiquant l'endroit de décharge de la pièce de bois.

30. Système selon l'une quelconque des revendications 17 à 29, dans lequel les données caractéristiques de la pièce de bois comprennent les informations sur la taille de la pièce de bois, **caractérisé en ce que** le système comprend des instruments (30) destinés à manipuler et déplacer les pièces de bois, lesquels instruments (30) comprennent un moyen (38) destiné à détecter la taille de la pièce de bois en relation avec le recueil, de la pièce de bois par l'instrument respectif, et **en ce que** le système comprend un moyen (31) destiné à comparer la taille détectée avec les valeurs de taille stockées de façon à déterminer l'identité de la pièce de bois qui a été recueillie.

31. Système selon l'une quelconque des revendications 17 à 30, dans lequel les données caractéristiques de la pièce de bois comprennent les informations sur le poids de la pièce de bois, **caractérisé en ce que** le système comprend les instruments (30) destinés à manipuler et déplacer les pièces de bois, lesquels instruments comprennent un moyen (37) destiné à détecter le poids de la pièce de bois en relation avec le recueil de la pièce de bois par l'instrument respectif, et **en ce que** le système comprend un moyen (31) destiné à comparer le poids détecté avec des valeurs de poids stockées de façon à déterminer l'identité de la pièce de bois qui a été recueillie.

32. Système selon la revendication 27 ou 28, **caractérisé en ce que** le système comprend des instruments (30) destinés à manipuler et déplacer les pièces de bois, lesquels instruments comprennent un moyen (40) destiné à lire le marquage de la pièce de bois en relation avec le recueil de la pièce de bois par l'instrument respectif (30) de façon à déterminer l'identité de la pièce de bois qui a été recueillie.

33. Système selon l'une quelconque des revendications 30 à 32, **caractérisé en ce que** le système comprend un agencement informatique (31), qui est adapté pour enregistrer automatiquement le recueil et la décharge de la pièce de bois identifiée et enregistrer et stocker les informations de position indiquant l'endroit de décharge de la pièce de bois.
